# EUROPÄISCHE PATENTSCHRIFT

(11) **EP 2 840 183 B1**
(45) Veröffentlichungstag und Bekanntmachung des Hinweises auf die Patenterteilung: **06.01.2016**
(21) Anmeldenummer: 14180581.2
(22) Anmeldetag: 11.08.2014
(51) Int. Cl.: E01C 23/088

(54) **Selbstfahrende Baumaschine und Verfahren zum Betreiben einer selbstfahrenden Baumaschine**
Self-propelled construction machine and method for operating a self-propelled construction machine
Engin autopropulsé et procédé de fonctionnement d'un engin automoteur

(30) Priorität: 23.08.2013 DE 102013013967
(43) Veröffentlichungstag der Anmeldung: 25.02.2015
(73) Patentinhaber: Wirtgen GmbH, 53578 Windhagen (DE)
(72) Erfinder: Berning, Christian, 53909 Zülpich (DE); Vogt, Andreas, 53567 Asbach (DE); Barimani, Dr. Cyrus, 53639 Königswinter (DE); Hähn, Dr. Günter, 53639 Königswinter (DE)
(74) Vertreter: Oppermann, Frank

(56) Entgegenhaltungen:
- EP-A2- 1 860 241
- EP-A2- 1 936 034
- EP-A2- 2 455 544

## Beschreibung

Die Erfindung betrifft eine selbstfahrende Baumaschinel gemäss dem Oberbegriff des Patentanspruchs 1. Darüber hinaus betrifft die Erfindung ein Verfahren zum Betreiben einer selbstfahrenden Baumaschine gemäss dem Oberbegriff des Patentanspruchs 13.

Die bekannten Straßenfräsmaschinen verfügen über eine Fräswalze, mit der Material abgefräst wird. Die Fräswalze ist in einem Fräswalzengehäuse angeordnet, in dem sich das abgefräste Material sammelt.

Die Straßenfräsmaschinen verfügen über eine Transporteinrichtung, die das abgefräste Material von dem Walzengehäuse übernimmt, um das Material auf ein Transportfahrzeug zu verladen. Darüber hinaus verfügen die Straßenfräsmaschinen über eine Abstreifeinrichtung, die in Arbeitsrichtung hinter der Fräswalze vorgesehen ist. Die Abstreifeinrichtung weist ein höhenverstellbares Abstreifschild auf. Wenn das abgefräste Material während des Arbeitseinsatzes verladen werden soll, gleitet die Unterkante des Abstreifschildes auf der abgefrästen Oberfläche, so dass die Oberfläche sauber abgezogen wird. Dabei verschließt das Abstreifschild das Fräswalzengehäuse in Arbeitsrichtung hinter der Fräswalze.

Wenn das abgefräste Material hingegen nicht verladen werden soll, ist es erforderlich, das Abstreifschild gegenüber der Fräswalze anzuheben, so dass das Fräsgut in Arbeitsrichtung hinter dem Fräswalzengehäuse liegen bleiben kann. Aufgrund des Lockerungsfaktors, der ca. 1,2-1,5 beträgt, nimmt das Volumen des abgefrästen Materials zu, so dass der gefräste Kanal nur einen Teil des Fräsgutes aufnehmen kann. Der Rest des Fräsgutes wird zu einer Schüttung aufgeworfen, bei der sich zumindest an den äußeren Flanken ein Reibungswinkel von ca. 30 bis 40° einstellt. Die Höhe der Schüttung ist unter anderem von der Frästiefe und dem tatsächlich sich einstellenden Lockerungsfaktor abhängig.

Wenn in diesem Betriebsmodus das Abstreifschild eine zu geringe Höhe hat, wird das abgefräste Material im Fräswalzengehäuse zurückgehalten, so dass sich das Fräswalzengehäuse zunehmend mit Material füllt, was zusätzliche Reibung erzeugt, wodurch die Arbeitsleistung herabgesetzt wird, den Verschleiß erhöht und nicht zuletzt einen höheren Kraftstoffverbrauch zur Folge hat. Andererseits kann das Abstreifschild auch nicht beliebig hochgefahren werden, da das Fräswalzengehäuse ansonsten in Arbeitsrichtung hinter der Fräswalze geöffnet wäre, wodurch das Fräsgut nicht in der gewünschten Form einer Schwade in der Frässpur verbleibt, sondern breit verstreut wird, was aufwändige Nacharbeit zur Folge hätte.

In der Praxis wird der Maschinenführer gezwungen sein, das Abstreifschild in eine relativ weit geöffnete Position zu verfahren, da er aufgrund der Anordnung der einzelnen Komponenten der Maschine keine Möglichkeit hat, den relevanten Bereich einzusehen, um die Höhe des Abstreifschildes genau einzustellen.

Stabilisierer und Recycler verfügen nicht über eine Transporteinrichtung. Daher ist die das Walzengehäuse verschließende Walzenklappe bei Stabilisieren und Recyclern so einzustellen, dass das Material aus dem Walzengehäuse austreten kann.

Die EP 2 455 544 A2 beschreibt eine selbstfahrende Baumaschine, die über eine in einem Fräswalzengehäuse angeordnete Fräswalze verfügt. In Arbeitsrichtung hinter der Fräswalze ist ein Abstreifschild vorgesehen, das mit einer Antriebseinheit gegenüber der Fräswalze in der Höhe verstellbar ist. Eine Straßenfräsmaschine, die über eine Fräswalze und ein in Arbeitsrichtung hinter der Fräswalze angeordnetes Abstreifschild verfügt, ist auch aus der EP 1 860 241 A2 bekannt. Während des Fräsbetriebs ist das Abstreifschild auf den Boden abgesenkt, wobei sich das abgefräste Material in dem Fräswalzengehäuse ansammelt und mit einer Transporteinrichtung aufgenommen und verladen wird. Aus der EP 1 936 034 A2 ist eine Straßenfräsmaschine bekannt, bei der die Seitenschilder und die Abstreifeinrichtungen mit Messeinrichtungen versehen sind, um die aktuelle Frästiefe der Fräswalze zu erfassen. Die Messeinrichtungen messen dabei den Abstand zwischen der Boden- oder Verkehrsfläche und dem Grund der Frässpur.

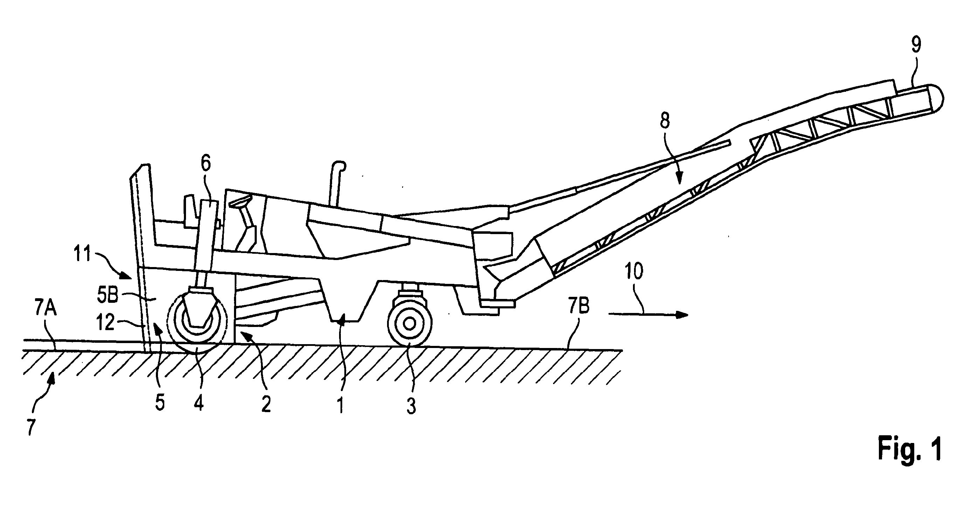

Fig. 1 zeigt den Betrieb der Straßenfräsmaschine, wobei die Fräswalze 12 mit dem Boden 2 in Eingriff ist. Die Unterkante des Schnittkreises der Fräswalze 8 und die Unterkante des Abstreifschildes 22 befinden sich dabei auf der gleichen Höhe.

Der Erfindung liegt die Aufgabe zu Grunde, eine selbstfahrende Baumaschine, insbesondere Straßenfräsmaschine, zu schaffen, die auch dann betrieben werden kann, wenn das abgefräste Material nicht verladen wird, sondern in der Frässpur verbleiben soll. Eine weitere Aufgabe der Erfindung liegt darin, ein Verfahren zum Betreiben einer selbstfahrenden Baumaschine anzugeben, wenn das Fräsgut nicht verladen wird, sondern in der Frässpur verbleibt.

Die Lösung dieser Aufgaben erfolgt erfindungsgemäß mit den Merkmalen der unabhängigen Patentansprüche. Die Gegenstände der abhängigen Ansprüche betreffen bevorzugte Ausführungsformen der Erfindung.

Die erfindungsgemäße Baumaschine, insbesondere Straßenfräsmaschine, weist eine Antriebseinheit auf, mit der das Abstreifschild der Abstreifeinrichtung gegenüber der Fräswalze in der Höhe verstellbar ist. Darüber hinaus weist die erfindungsgemäße Baumaschine eine Steuer- und/oder Regeleinheit für die Antriebseinheit zur Höhenverstellung des Abstreifschildes und eine Messeinrichtung zum Messen des Abstandes zwischen mindestens einem Referenzpunkt, der in Bezug zu der Unterkante des Abstreifschildes steht, und dem abgefrästen Material auf.

Die Steuer- und/oder Regeleinheit der erfindungsgemäßen Baumaschine ist derart ausgebildet, dass die Höhe des Abstreifschildes in Abhängigkeit von der Höhe des in der Frässpur verbleibenden, abgefrästen Materials verstellt wird. Die Steuer- und/oder Regeleinheit stellt sicher, dass einerseits das abgefräste Material aus dem Fräswalzengehäuse in Arbeitsrichtung hinter der Fräswalze weitgehend ungehindert austreten kann und andererseits das Fräswalzengehäuse oberhalb des austretenden Materials weitgehend verschlossen ist. Dadurch wird einerseits ein störungsfreier Betrieb der Fräsmaschine gewährleistet und andererseits ein sauberes Arbeitsergebnis erzielt.

Die selbstfahrende Baumaschine ist insbesondere eine Straßenfräsmaschine, die insbesondere eine Transporteinrichtung zum Fördern des abgefrästen Materials von dem Fräswalzengehäuse zu einem Transportfahrzeug aufweist. Die Straßenfräsmaschine kann eine Frontlader-Straßenfräse sein, bei der das abgefräste Material über die Front der Maschine auf einen vorausfahrenden LKW verladen wird, oder eine Hecklader-Straßenfräse sein, bei der das abgefräste Material über das Heck auf einen nachfolgenden LKW verladen wird.

Eine bevorzugte Ausführungsform der Straßenfräsmaschine sieht eine Eingabeeinheit vor, mit der zwei Betriebsmodi vorgegeben werden können. Dabei ist unerheblich, wie die Eingabeeinheit ausgebildet ist. Beispielsweise kann die Eingabeeinheit ein oder mehrere Schalter oder Tasten umfassen. Sie kann aber auch Teil einer Menüführung sein. In dem ersten Betriebsmodus ist die Transporteinrichtung aktiviert und die Steuer- und/oder Regeleinheit deaktiviert. Dies ist dann der Fall, wenn das abgefräste Material verladen werden soll. Wenn das abgefräste Material aber nicht verladen, sondern in der Frässpur verbleiben soll, wird der zweite Betriebsmodus vorgegeben, in dem die Transporteinrichtung deaktiviert und die Steuer- und/oder Regeleinheit aktiviert ist.

Eine bevorzugte Ausführungsform sieht vor, dass die Steuer- und/oder Regeleinheit die Antriebseinheit derart ansteuert bzw. regelt, dass der gemessene Abstand zwischen mindestens einem Referenzpunkt, der in Bezug zu der Unterkante des Abstreifschildes steht, und dem abgefrästen Material einem vorgegebenen Wert entspricht oder in einem vorgegebenen Wertebereich liegt. In der Praxis ist es ausreichend, wenn eine Höhenkorrektur nur dann vorgenommen wird, wenn der gemessene Abstand einen bestimmten Toleranzbereich verlässt, so dass Korrekturen in der Höheneinstellung des Abstreifschildes nicht dauernd vorgenommen werden.

Zum Messen des Abstandes zwischen mindestens einem Referenzpunkt, der in Bezug zu der Unterkante des Abstreifschildes steht, und dem abgefrästen Material können eine oder mehrere Abstandsmessungen vorgenommen werden. Die Abstandsmessung kann sich auf einen kleinen Messpunkt (Spotmessung) oder einen größeren Messbereich (Bereichsmessung) auf der Oberfläche des abgefrästen Materials beziehen.

Die Messeinrichtung ist vorzugsweise derart ausgebildet, dass eine oder mehrere Abstandsmessungen außerhalb des Fräswalzengehäuses in Arbeitsrichtung hinter dem Abstreifschild vorgenommen werden. Grundsätzlich ist es aber auch möglich, den Abstand im Fräswalzengehäuse zu messen.

Die Messeinrichtung weist vorzugsweise einen oder mehrere Abstandssensoren auf, die vorzugsweise an der in Arbeitsrichtung hinteren Seite des Abstreifschildes oberhalb dessen Unterkante angeordnet sind. Die Abstandssensoren können unterschiedlich ausgebildet sein. Sie können den Abstand berührungslos oder taktil messen. Beispielsweise können die berührungslosen Abstandssensoren die bekannten Ultraschall-Entfernungsmessungs-Sensoren, induktive, kapazitive, optische Entfernungsmessungs-Sensoren oder Radar-Entfernungsmessungs-Sensoren sein. Taktile Abstandssensoren verfügen über mindestens ein Tastelement, das auf dem abgefrästen Material aufliegt.

Bei einer bevorzugten Ausführungsform ist die Messeinrichtung derart ausgebildet, dass mit dem Abstandsensor der Abstand zwischen der Oberfläche des abgefrästen Materials und einem Referenzpunkt gemessen wird, der nicht auf der Höhe der Unterkante des Abstreifschildes liegt, so dass der Abstandssensor sich nicht unmittelbar an oder neben der Unterkante des Abstreifschildes befinden muss. Dadurch wird ein großer Freiraum für die Anordnung des Abstandssensors geschaffen.

Das in Arbeitsrichtung hinter der Fräswalze aufgeworfene Material zeigt in einer quer zur Arbeitsrichtung verlaufenden Schnittebene einen charakteristischen Querschnitt, der unter anderem von dem Typ der Fräswalze abhängig ist. Es sind Fräswalzen bekannt, die sich dadurch auszeichnen, das dass Material zur Mitte des Fräswalzengehäuses hin aufgeworfen wird, so dass die maximale Höhe des aufgeworfenen Materials in einem Bereich in etwa mittig zwischen der linken und der rechten Kante des Abstreifschildes am höchsten ist und die Höhe des Materials zu den Seiten hin abfällt. Es ist beispielsweise aber auch möglich, dass das Material innerhalb des Fräswalzengehäuses zu einer der beiden Seiten hin gefördert wird, wobei sich wieder ein Schüttkegel einstellen wird, der dann aber auf der linken oder rechten Seite liegt.

Im einfachsten Fall sieht die Steuerung und/oder Regelung vor, dass sich das Abstreifschild oberhalb der höchsten Stelle des aufgeworfenen Materials befindet, die in Abhängigkeit von dem Querschnitt des aufgeworfenen Materials in der Mitte oder auf der linken oder rechten Seite des Fräswalzengehäuses liegen kann. Der verbleibende Spalt zwischen der Unterkante des Schildes und Oberseite des Materials sollte dann möglichst klein sein. Es ist aber auch möglich, dass die Steuerung und/oder Regelung bewusst ein Eintauchen des Abstreifschildes in das Material an der höchsten Stelle vorsieht, wenn der Abstand zwischen der Unterkante des Schildes und Oberseite des Materials nicht an der höchsten Stelle gemessen wird.

Bei einer bevorzugten Ausführungsform ist die Messeinrichtung zum Messen des Abstandes zwischen der Unterkante des Abstreifschildes und dem abgefrästen Material derart ausgebildet, dass Abstandsmessungen an mehreren Referenzpunkten vorgenommen werden, die zwischen der in Arbeitsrichtung linken und rechten Kante des Abstreifschildes liegen. Eine Ausführungsform sieht vor, dass die Höhe des Abstreifschildes in Abhängigkeit von dem Mittelwert der gemessenen Abstände zwischen den jeweiligen Referenzpunkten, die in Bezug zu der Unterkante des Abstreifschildes stehen, und dem abgefrästen Material verstellt wird.

Eine besonders bevorzugte Ausführungsform sieht vor, dass die Höhe des Abstreifschildes in Abhängigkeit von dem kleinsten oder größten gemessenen Abstand zwischen einem Referenzpunkt, der in Bezug zu der Unterkante des Abstreifschildes steht, und dem abgefrästen Material verstellt wird. Wenn die Höhe des Abstreifschildes in Abhängigkeit von dem größten Abstand eingestellt wird, taucht das Abstreifschild an der höchsten Stelle tiefer in das Material ein, während bei einer Einstellung der Höhe des Abstreifschilds in Abhängigkeit von dem kleinsten Abstand sogar ein Spalt zwischen Abstreifschild und Material verbleiben kann.

Derjenige Abstandssensor, mit dem die Messung erfolgen soll, kann vom Fahrzeugführer ausgewählt werden. Beispielsweise kann der Fahrzeugführer für den Fräswalzentyp, der das Material zur Mitte hin aufwirft, einen mittigen Abstandssensor auswählen, der den geringsten Abstand misst. Die Auswahl desjenigen Abstandssensors kann aber auch von der Steuer- und/oder Regeleinheit selbst erfolgen, in dem während der Abstandsmessung immer der Sensor zur Steuerung/Regelung verwendet wird, mit dem aktuell der kleinste oder größte Abstand gemessen wird.

Wenn das aufgeworfene Material beispielsweise einen symmetrischen Querschnitt hat, sieht eine besonders bevorzugte Ausführungsform eine mittige Messung in einem Bereich vor, der vorzugsweise 50 %, insbesondere 30 % der Breite des Abstreifschildes beträgt, so dass zwischen dem Abstreifschild und dem Material ein Spalt verbleibt.

Eine alternative Ausführungsform sieht bei einem symmetrischen Querschnitt vor, dass die Steuerung und/oder Regelung derart erfolgt, dass das Abstreifschild in das aufgeworfene Material eintaucht, so dass das Fräswalzengehäuse in Arbeitsrichtung hinter der Fräswalze vollständig verschlossen ist. Dabei darf das Abstreifschild aber nicht zu tief in das Material eintauchen, da ansonsten Material in dem Fräswalzengehäuse verbleibt. Eine optimale Einstellung ist daher nur dann gegeben, wenn das Abstreifschild in der Mitte des aufgeworfenen Materials nur leicht in das Material eintaucht.

Die Messeinrichtung ist bei dieser alternativen Ausführungsform derart ausgebildet, dass bei einem symmetrischen Querschnitt mindestens eine Abstandsmessung in einem vorgegebenen Abstand zu der in Arbeitsrichtung linken Kante des Abstreifschildes und/oder mindestens eine Abstandsmessung in einem vorgegebenen Abstand zu der in Arbeitsrichtung rechten Kante des Abstreifschildes vorgenommen wird. Mit diesen Abstandsmessungen kann die Höhe der seitlichen Flanke des ausgeworfenen Materials bestimmt werden. Diese Höhe liegt immer niedriger als die Höhe in der Mitte des aufgeworfenen Materials zwischen der linken und rechten Kante des Abstreifelements. Beispielsweise kann die untere Kante des Abstreifschildes auf die Höhe eines Punktes an der linken und/oder rechten Flanke des aufgeworfenen Materials eingestellt werden. Im dem Fall taucht die Unterkante des Abstreifschildes in der Mitte leicht in das aufgeworfene Material ein.

Der vorgegebene Abstand von der linken Kante bzw. der vorgegebene Abstand von der rechten Kante des Abstreifschildes kann beispielsweise zwischen 0 und 30 %, vorzugsweise 10 bis 20 % der Breite des Abstreifschildes, d. h. dem Abstand zwischen dessen linker und rechter Kante betragen, da sich in diesem Bereich der charakteristische Flankenverlauf einstellt.

Im Folgenden werden mehrere Ausführungsbeispiele der Erfindung unter Bezugnahme auf die Zeichnungen näher erläutert.

Es zeigen:
- Fig. 1: eine Straßenfräsmaschine in der Seitenansicht,
- Fig. 2A: eine Abstreifvorrichtung einer Straßenfräsmaschine in perspektivischer Darstellung, wobei das Abstreifschild abgesenkt ist,
- Fig. 2B: die Abstreifvorrichtung von Fig. 2A, wobei das Abstreifschild angehoben ist,
- Fig. 3: eine stark vereinfachte schematische Darstellung des Abstreifschildes von Fig. 2A und 2B in der Rückansicht, wobei das aufgeworfene Material einen symmetrischen Querschnitt hat,
- Fig. 4: einen Schnitt durch das Abstreifschild von Fig. 3 entlang der Linie IV-IV,
- Fig. 5: ein Ausführungsbeispiel, bei dem das aufgeworfene Material einen asymmetrischen Querschnitt hat, und
- Fig. 6: eine alternative Ausführungsform mit nur einem quer zur Arbeitsrichtung verschiebbaren Abstandssensor.

Fig. 1 zeigt die wesentlichen Komponenten einer Straßenfräsmaschine als Beispiel für eine selbstfahrende Baumaschine. Die Straßenfräsmaschine weist einen Maschinenrahmen 1 und ein Fahrwerk 2 auf, das vordere und hintere Kettenlaufwerke 3 oder Räder umfassen kann.

Die Straßenfräsmaschine verfügt über eine Fräswalze 4, die in einem Fräswalzengehäuse 5 am Maschinenrahmen 1 angeordnet ist. Bei dem vorliegenden Ausführungsbeispiel befindet sich das Fräswalzengehäuse 5 am Heck der Maschine. Der Maschinenrahmen 1 ist mittels Kolben/Zylinder-Anordnungen 6 gegenüber der Oberfläche 7B des Bodens 7 in der Höhe verstellbar. Durch Anheben bzw. Absenken des Maschinenrahmens 1 gegenüber dem Boden 7 wird die Frästiefe eingestellt.

Das abgefräste Material kann auf einem Transportfahrzeug verladen werden. Hierzu weist die Straßenfräsmaschine eine Transporteinrichtung 8 mit einem Förderband 9 auf, die das Fräsgut von dem Fräswalzengehäuse 5 zu einem LKW befördert.

An der in Arbeitsrichtung 10 linken und rechten Seite ist das Fräswalzengehäuse 5 von seitlichen Platten 5A, 5B verschlossen, wobei in Fig. 1 nur die in Arbeitsrichtung rechte Seitenplatte 5B zu erkennen ist. In Arbeitsrichtung 10 hinter der Fräswalze 4 befindet sich eine Abstreifeinrichtung 11, die ein höhenverstellbares Abstreifschild 12 aufweist, mit dem das Fräswalzengehäuse an der Rückseite verschlossen werden kann.

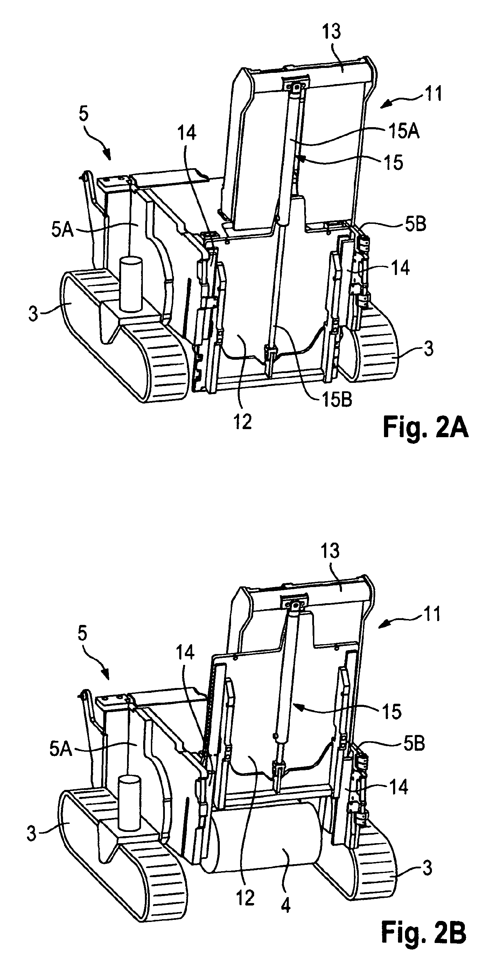

Fig. 2A und Fig. 2B zeigen das Fräswalzengehäuse 5 mit der Abstreifeinrichtung 11 in perspektivischer Darstellung. Das Abstreifschild 12 ist in einem Portal 13 am Maschinenrahmen 1 in seitlichen Führungen 14 geführt. Dabei kann das Abstreifschild gegenüber dem Boden leicht schräg gestellt sein.

Die Antriebseinheit zum Heben bzw. Absenken des Abstreifschildes weist eine Kolben/Zylinder-Anordnung 15 auf, deren Zylinder 15A an dem Portal 13 und deren Kolben 15B an dem Abstreifschild 12 gelenkig befestigt ist. Fig. 2A zeigt das Abstreifschild 12 in der abgesenkten und Fig. 2B in der angehobenen Position.

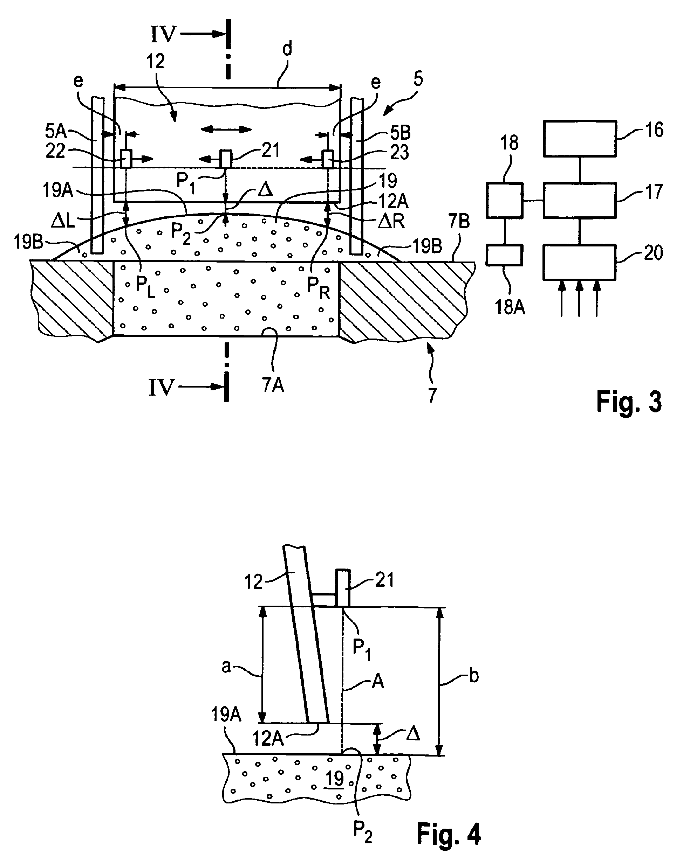

Die Antriebseinheit 16 der Abstreifvorrichtung 11 wird von einer Steuer- und/oder Regeleinheit 17 gesteuert bzw. geregelt, die Bestandteil der zentralen Steuer- und/oder Regeleinheit der Straßenfräsmaschine sein kann (Fig. 3).

Nachfolgend werden Aufbau und Funktion der Abstreifeinrichtung 11 unter Bezugnahme auf die Figuren 3 bis 4 im Einzelnen beschrieben.

Die Straßenfräsmaschine sieht zwei Betriebsmodi vor, die auf einer Eingabeeinheit 18 ausgewählt werden können. In dem ersten Betriebsmodus wird das Förderband 9 der Transporteinrichtung 8 der Straßenfräsmaschine eingeschaltet und die Steuer- und/oder Regeleinheit 17 für die Antriebseinheit 16 der Abstreifeinrichtung 11 ausgeschaltet, d. h. in ihrer besonderen Funktion deaktiviert, wobei das Abstreifschild 12 nach unten gefahren wird, so dass die Unterkante 12A des Abstreifschildes auf der Oberfläche des abgefrästen Bodens 7 aufliegt (Fig. 2A). Folglich wird die abgefräste Oberfläche abgestreift und das Fräsgut verladen. Dies ist der bevorzugte Betriebsmodus der Fräsmaschine. Hierzu kann eine besondere Steuerung bzw. Regelung vorgesehen sein, die aber nicht Gegenstand der Erfindung ist.

Es ist aber auch möglich, die Straßenfräsmaschine in einem zweiten Betriebsmodus zu betreiben, wenn das abgefräste Material zumindest nicht vollständig verladen, sondern zumindest teilweise auf der Oberfläche 7B des abgefrästen Bodens 7 verbleiben soll. In dem zweiten Betriebsmodus wird die Steuer- und/oder Regeleinheit 17 für die Antriebseinheit 16 der Abstreifeinrichtung 11 aktiviert und die Transporteinrichtung 8 deaktiviert.

Die Figuren 3 und 4 veranschaulichen in stark vereinfachter schematischer Darstellung den Aufbau und die Funktion der Abstreifeinrichtung 11 in dem zweiten Betriebsmodus. Fig. 3 zeigt das angehobene Abstreifschild in der Rückansicht zusammen mit den Seitenplatten 5A, 5B, die das Fräswalzengehäuse 5 auf der in Arbeitsrichtung 10 linken und rechten Seite verschließen. Wenn das Fräswalzengehäuse 5 an der Rückseite geöffnet ist, bleibt das abgefräste Material auf dem Boden liegen. Das aufgeworfene Material zeigt in einer quer zur Arbeitsrichtung 10 verlaufenden Schnittebene eine charakteristische Kontur, die vom Fräswalzentyp abhängt.

Zunächst wird ein Ausführungsbeispiel beschrieben, bei dem die Fräswalze 4 das Material zur Mitte des Fräswalzengehäuses hin aufwirft, so dass das aufgeworfene Material einen symmetrischen Querschnitt hat. In der Mitte zwischen den Seitenplatten 5A, 5B hat das aufgeworfene Material 19 daher die größte Höhe, die von der Frästiefe und dem Lockerungsfaktor abhängig ist. An den beiden Seiten zeigt die Kontur schräg abfallende Flanken 19B, deren Reibungswinkel auch von der Materialbeschaffenheit abhängt. Die Steuer- und/oder Regeleinheit 17 steuert bzw. regelt die Antriebseinheit 16 derart, dass die Höhe des Abstreifschildes 12 in Bezug auf das aufgeworfene Material optimal eingestellt wird. Zum Bestimmen des Abstandes zwischen der Unterkante 12A des Abstreifschildes 12 und der Oberfläche 19A des aufgeworfenen Materials 19 ist eine Messeinrichtung 20 vorgesehen, die ein oder mehrere Abstandssensoren 21, 22, 23 umfasst. Die Abstandssensoren können unterschiedlich ausgebildet sein.

Bei einem ersten Ausführungsbeispiel weist die Messeinrichtung 20 einen Abstandssensor 21 auf, der an der Rückseite des Abstreifschildes 12 oberhalb dessen Unterkante 12A angeordnet ist. Die Höhe des Abstandssensors 21 gegenüber der Unterkante des Abstreifschildes ist mit a bezeichnet. Der Abstandssensor 21 misst in Richtung einer vorzugsweise vertikalen Achse A die Entfernung zwischen einem Punkt P₁ in der Ebene des Abstandssensors und einem Punkt P₂, in dem die Achse A die Oberfläche des aufgeworfenen Materials schneidet (Fig. 4).

Aus dem Abstand b zwischen den Punkten P₁ und P₂ und der Höhe a des Abstandssensors 21 gegenüber der Unterkante 12A des Abstreifschildes 12 berechnet die Messeinrichtung 20 den Abstand Δ zwischen der Unterkante 12A des Abstreifschildes 12 und der Materialoberfläche 19A. Da der Abstandssensor 21 mittig zwischen den beiden Seitenplatten 5A, 5B bzw. den linken und rechten Kanten des Abstreifschildes 12 angeordnet ist, wird bei einem symmetrischen Profil an der Stelle der maximalen Höhe der Schüttung gemessen.

Die Steuer- und/oder Regeleinheit 17 steuert bzw. regelt die Antriebseinheit 16 derart, dass der Abstand Δ zwischen der Unterkante 12A des Abstreifschildes 12 und der Oberseite 19A des abgefrästen Materials 19 einem vorgegebenen Wert entspricht oder in einem vorgegebenen Wertebereich liegt. Vorzugsweise wird eine Höhenkorrektur dann vorgenommen, wenn der Spalt zwischen Unterkante des Abstreifschildes und dem aufgeworfenen Material in der Mitte zwischen den Seitenplatten einen vorgegebenen Minimalwert unterschreitet bzw. einen vorgegebenen Maximalwert überschreitet. Bei einem Unterschreiten des Minimalwertes wird das Abstreifschild angehoben und bei einem Überschreiten des Maximalwertes das Abstreifschild abgesenkt. Mit dem mittigen Abstandssensor kann eine Spotmessung oder eine Bereichsmessung vorgenommen werden. Der Abstand Δ kann auch mit mehreren Abstandssensoren in dem mittigen Bereich gemessen werden, wobei der Mittelwert gebildet und zur Steuerung und/oder Regelung herangezogen wird.

Aufgrund der charakteristischen Kontur der Schüttung erfolgt die Abstandsmessung vorzugsweise in einem Bereich in der Mitte zwischen der linken und rechten Kante des Abstreifschildes 12, dessen Breite 50 %, vorzugsweise 30 % der Breite d des Abstreifschildes ist.

Die oben beschriebene Steuerung bzw. Regelung setzt voraus, dass das zunächst hochgefahrene Abstreifschild 12 so lange abgesenkt wird oder das abgesenkte Abstreifschild angehoben wird, bis der Abstand zwischen Abstreifschild und Material dem vorgegebenen Wert oder Wertebereich entspricht, d. h. das Abstreifschild nicht in das Material eindringt.

Eine alternative Ausführungsform sieht ein leichtes Eindringen des Abstreifschildes 12 in das Material vor, so dass zumindest in der Mitte zwischen den Seitenplatten 5A, 5B kein Spalt verbleibt. Bei dieser Ausführungsform weist die Messeinrichtung 20 einen in Arbeitsrichtung 10 linken und rechten Abstandssensor 22, 23 auf, wobei der linke Sensor 22 in einem Abstand e von der linken Kante und der rechte Sensor 23 in einem Abstand e von der rechten Kante des Abstreifschildes angeordnet ist. Der Abstand e von der linken und rechten Kante kann beispielsweise bis zu 20% der Breite des Abstreifschildes betragen. Aufgrund der Symmetrie der Kontur des aufgeworfenen Materials ist grundsätzlich nur ein linker oder rechter Abstandssensor ausreichend. Eine Mittelwertbildung mit zwei Abstandssensoren erhöht aber die Messgenauigkeit.

Mit den beiden Abstandssensoren 22, 23 wird bei der alternativen Ausführungsform der Abstand zu den in Fig. 3 angegebenen Punkten P_{L} und P_{R} gemessen, die auf den Flanken 19B des aufgeworfenen Materials 19 liegen. Dabei wird die Höhe des Abstreifschildes 12 derart gesteuert bzw. geregelt, dass der Abstand Δ_{L} bzw. Δ_{R} einem vorgegebenen Wert oder Wertebereich entspricht, der derart bemessen ist, dass die Unterkante 12A des Abstreifschildes 12 in der Mitte leicht in das aufgeworfene Material 19 eintaucht, ohne jedoch im Bereich der Messpunkte P_{L} und P_{R} die Flanken 19B der Materialoberfläche 19A zu berühren.

Die Messeinrichtung kann sowohl über einen oder mehrere mittige Abstandssensoren als auch einen oder mehrere seitliche Abstandssensoren verfügen, d. h. bei dem vorliegenden Ausführungsbeispiel über sämtliche Abstandssensoren 21, 22, 23 verfügen. Bei einer Ausführungsform mit mehreren Abstandssensoren 21, 22, 23 kann der Maschinenführer auf der Eingabeeinheit 18 denjenigen Abstandssensor auswählen, mit dem die Abstandsmessung erfolgen soll. Beispielsweise kann der Maschinenführer den mittigen Abstandssensor 21, der den kleinsten Abstand misst, für eine Steuerung und/oder Regelung auswählen, so dass zwischen Abstreifschild und Material ein kleiner Spalt verbleibt. Der Fahrzeugführer kann aber auch zumindest einen der beiden seitlichen Abstandssensoren 22, 23, die einen größeren Abstand messen, für eine Steuerung und/oder Regelung auswählen, so dass das Abstreifschild in der Mitte der Schüttung leicht in das Material eintaucht. Die mit den Sensoren 21, 22, 23 gemessenen Abstände können auf einer Anzeigeeinheit 18A angezeigt werden, so dass der Fahrzeugführer den jeweiligen Sensor auch ohne Kenntnis des Fräswalzentyps auswählen könnte.

Bei einer weiteren Ausführungsform ist die Steuer- und/oder Regeleinheit 17 derart ausgebildet, dass die Auswahl des Abstandssensors 21, 22, 23 von der Steuer- und/oder Regeleinheit selbst vorgenommen wird. Die Steuer- und/oder Regeleinheit ist derart ausgebildet, dass die mit sämtlichen Sensoren gemessenen Abstände miteinander verglichen werden, wobei die Steuer- und/oder Regeleinheit denjenigen Abstandssensor bestimmt, bei dem der kleinste bzw. größte Abstand gemessen wird. Die Steuer- und/oder Regeleinheit sieht dann eine Steuerung und/oder Regelung auf der Grundlage des kleinsten bzw. größten Abstandes vor.

Wenn der Fräswalzentyp auf der Eingabeeinheit 18 eingegeben wird, kann die Steuer- und Regeleinheit 17 auf den Querschnitt des aufgeworfenen Materials schließen, so dass eine Auswahl des zu verwendenden Sensors auch ohne einen Vergleich der gemessenen Abstände erfolgen kann.

Es ist auch möglich, die Abstandsmessungen in der Mitte und an den Flanken des aufgeworfenen Materials miteinander zu kombinieren. Beispielsweise ist es möglich, auf der Grundlage einer Steuerung bzw. Regelung mit einer Abstandsmessung in der Mitte des aufgeworfenen Materials das Abstreifschild bis auf einen vorgegebene Mindestabstand an die Materialoberfläche heranzufahren, um dann auf eine Abstandsmessung an den Flanken des aufgeworfenen Materials überzugehen, um das Abstreifschild auf die Höhe der Materialoberfläche in der Mitte einzustellen oder leicht in das Material eintauchen zu lassen.

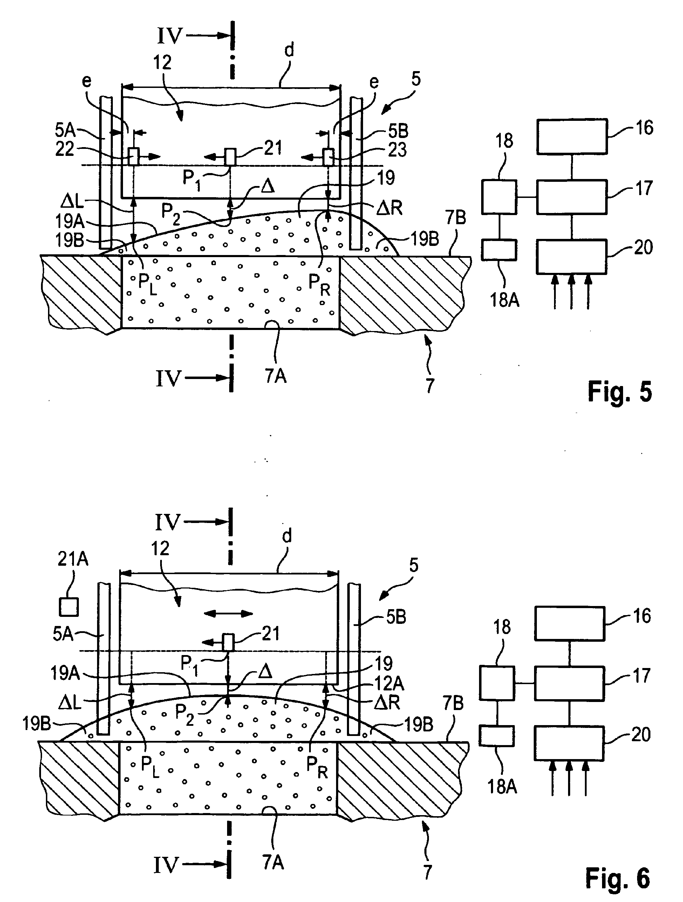

Fig. 5 zeigt ein Ausführungsbeispiel, bei dem das aufgeworfene Material einen asymmetrischen Querschnitt hat, wobei sich die maximale Höhe des Materials auf der rechten Seite befindet. Folglich erfolgt die Abstandsmessung mit dem rechten Abstandssensor 23, der den kleinsten Abstand Δ_{R} misst. Dieser kann wieder vom Fahrzeugführer oder von der Steuer- und Regeleinheit 17 in Abhängigkeit von dem Fräswalzentyp ausgewählt werden. Die einander entsprechenden Teile sind mit den gleichen Bezugszeichen versehen. Es kann aber auch eine Messung mit mehreren Sensoren 21, 22, 23 erfolgen, wobei auch der Mittelwert gebildet werden kann.

Fig. 6 zeigt eine Ausführungsbeispiel mit einer Messeinrichtung 20, die anstelle mehrerer Abstandssensoren nur einen Sensor 21 aufweist, der auf einer quer zur Arbeitsrichtung 10 verlaufend Achse zwischen den Seitenplatten 5A und 5B verschiebbar ist. Die einander entsprechenden Teile sind wieder mit den gleichen Bezugszeichen versehen. Für eine mittige Abstandsmessung wird der Sensor 21 in die Mitte und eine seitliche Messung an einer der beiden Seiten montiert. Der Abstandssensor kann aber auch zwischen den einzelnen Positionen auf einer Führung verfahren werden.

## Patentansprüche

1. Selbstfahrende Baumaschine, insbesondere Straßenfräsmaschine, die einen Maschinenrahmen (1) und ein Fräswalzengehäuse (5) aufweist, in dem eine Fräswalze (4) angeordnet ist, wobei in Arbeitsrichtung hinter der Fräswalze eine Abstreifeinrichtung (11) mit einem Abstreifschild (12) vorgesehen ist, das mit einer Antriebeinheit (16) gegenüber der Fräswalze in der Höhe verstellbar ist,
**dadurch gekennzeichnet, dass**
die Baumaschine eine Steuer- und/oder Regeleinheit (17) für die Antriebeinheit (16) zur Höhenverstellung des Abstreifschildes (12) und ein Messeinrichtung (20) zum Messen des Abstandes (Δ) zwischen mindestens einem Referenzpunkt, der in Bezug zu der Unterkante (12A) des Abstreifschildes (12) steht, und dem abgefrästen Material (19) aufweist, wobei die Steuer- und/oder Regeleinheit (17) derart ausgebildet ist, dass während des Abfräsens des Materials mit der Fräswalze (4) die Höhe des Abstreifschildes (12) in Abhängigkeit von der Höhe des in der Frässpur verbleibenden, abgefrästen Materials (19) verstellt wird.

2. Selbstfahrende Baumaschine nach Anspruch 1, **dadurch gekennzeichnet, dass** die Baumaschine eine Transporteinrichtung (8) zum Fördern des abgefrästen Materials aus dem Fräswalzengehäuse (5) und eine Eingabeeinheit (18) zur Eingabe eines ersten oder eines zweiten Betriebsmodus aufweist, wobei in dem ersten Betriebsmodus die Transporteinrichtung (8) aktiviert und die Steuer- und/oder Regeleinheit (17) deaktiviert ist, so dass das abgefräste Material bei geschlossenem Abstreifschild aus dem Fräswalzengehäuse transportiert werden und das Abstreifschild über die abgefräste Oberfläche gleiten kann, und in dem zweiten Betriebsmodus die Transporteinrichtung (8) deaktiviert und die Steuer- und/oder Regeleinheit (17) aktiviert ist, so dass das abgefräste Material bei geöffnetem Abstreifschild in der Frässpur liegen bleiben kann.

3. Selbstfahrende Baumaschine nach Anspruch 1 oder 2, **dadurch gekennzeichnet, dass** die Steuer- und/oder Regeleinheit (17) die Antriebeinheit (16) derart ansteuert, dass der gemessene Abstand (Δ) zwischen mindestens einem Referenzpunkt, der in Bezug zu der Unterkante (12A) des Abstreifschildes (12) steht, und dem abgefrästen Material einem vorgegebenen Wert entspricht oder in einem vorgegebenen Wertebereich liegt.

4. Selbstfahrende Baumaschine nach einem der Ansprüche 1 bis 3, **dadurch gekennzeichnet, dass** die Messeinrichtung (20) zum Messen des Abstandes (Δ) zwischen der Unterkante (12A) des Abstreifschildes (12) und dem abgefrästen Material derart ausgebildet ist, dass Abstandsmessungen an mehreren Referenzpunkten vorgenommen werden, die zwischen der in Arbeitsrichtung linken und rechten Kante des Abstreifschildes liegen.

5. Selbstfahrende Baumaschine nach einem der Ansprüche 1 bis 4, **dadurch gekennzeichnet, dass** die Steuer- und Regeleinheit (17) derart ausgebildet ist, dass die Höhe des Abstreifschildes (12) in Abhängigkeit von dem Mittelwert der gemessenen Abstände (Δ) zwischen den jeweiligen Referenzpunkten, die in Bezug zu der Unterkante (12A) des Abstreifschildes (12) stehen, und dem abgefrästen Material verstellt wird.

6. Selbstfahrende Baumaschine nach einem der Ansprüche 1 bis 4, **dadurch gekennzeichnet, dass** die Steuer- und Regeleinheit (17) derart ausgebildet ist, dass die Höhe des Abstreifschildes (12) in Abhängigkeit von dem kleinsten oder größten gemessenen Abstand (Δ) zwischen einem Referenzpunkt, der in Bezug zu der Unterkante (12A) des Abstreifschildes (12) steht, und dem abgefrästen Material verstellt wird.

7. Selbstfahrende Baumaschine nach einem der Ansprüche 1 bis 6, **dadurch gekennzeichnet, dass** die Messeinrichtung (20) zum Messen des Abstandes (Δ) zwischen dem abgefrästen Material und dem Abstreifschild derart ausgebildet ist, dass mindestens eine Abstandsmessung in einem Bereich in der Mitte zwischen der linken und rechten Kante des Abstreifschildes (12) vorgenommen wird.

8. Selbstfahrende Baumaschine nach einem der Ansprüche 1 bis 7, **dadurch gekennzeichnet, dass** die Messeinrichtung (20) zum Messen des Abstandes (Δ) zwischen dem abgefrästen Material und dem Abstreifschild derart ausgebildet ist, dass mindestens eine Abstandsmessung in einem vorgegebenen Abstand (e) zu der in Arbeitsrichtung (10) linken Kante des Abstreifschildes (12) und/oder mindestens eine Abstandsmessung in einem vorgegebenen Abstand (e) zu der in Arbeitsrichtung rechten Kante des Abstreifschildes (12) vorgenommen wird.

9. Selbstfahrende Baumaschine nach einem der Ansprüche 1 bis 8, **dadurch gekennzeichnet, dass** die Steuer- und/oder Regeleinheit (17) die Antriebeinheit (16) derart ansteuert, dass das Abstreifschild (12) angehoben wird, wenn der gemessene Abstand (Δ) zwischen dem mindestens einem Referenzpunkt, der in Bezug zu der Unterkante (12A) des Abstreifschildes (12) steht, und dem abgefrästen Material kleiner als ein erster vorgegebener unterer Grenzwert ist, und das Abstreifschild (12) abgesenkt wird, wenn der Abstand zwischen dem Abstreifschild und dem abgefrästen Material größer als ein zweiter vorgegebene oberer Grenzwert ist, wobei der obere Grenzwert gleich dem unteren Grenzwert ist oder der obere Grenzwert größer als der untere Grenzwert ist.

10. Selbstfahrende Baumaschine nach einem der Ansprüche 1 bis 9, **dadurch gekennzeichnet, dass** die Messeinrichtung (20) mindestens einen Abstandssensor (21, 22, 23) aufweist, der an der in Arbeitsrichtung (10) hinteren Seite des Abstreifschildes (12) oberhalb dessen Unterkante (12A) angeordnet sind.

11. Selbstfahrende Baumaschine nach Anspruch 10, **dadurch gekennzeichnet, dass** der mindestens eine Abstandssensor (21, 22, 23) zwischen der linken und rechten Kante des Abstreifschildes (12) verschiebbar angeordnet ist.

12. Selbstfahrende Baumaschine nach Anspruch 10 oder 11, **dadurch gekennzeichnet, dass** der mindestens eine Abstandssensor (21, 22, 23) ein berührungsloser Entfernungsmessungs-Sensor oder ein taktiler Entfernungsmessungs-Sensor ist.

13. Verfahren zum Betreiben einer selbstfahrenden Baumaschine, insbesondere Straßenfräsmaschine, die einen Maschinenrahmen und ein Fräswalzengehäuse aufweist, in dem eine Fräswalze angeordnet ist, wobei in Arbeitsrichtung hinter der Fräswalze eine Abstreifeinrichtung mit einem Abstreifschild vorgesehen ist, das mit einer Antriebeinheit gegenüber der Fräswalze in der Höhe verstellbar ist, **dadurch gekennzeichnet, dass** der Abstand (Δ) zwischen mindestens einem Referenzpunkt, der in Bezug zu der Unterkante (12A) des Abstreifschildes (12) steht, und dem abgefrästen Material (19) gemessen und während des Abfräsens des Materials mit der Fräswalze (4) die Höhe des Abstreifschildes in Abhängigkeit von der Höhe des in der Frässpur verbleibenden, abgefrästen Materials verstellt wird.

14. Verfahren nach Anspruch 13, **dadurch gekennzeichnet, dass** die Baumaschine eine abschaltbare Transporteinrichtung zum Transportieren des abgefrästen Materials aus dem Fräswalzengehäuse aufweist, wobei die Höhe des Abstreifschildes in Abhängigkeit von der Höhe des in der Frässpur verbleibenden, abgefrästen Materials verstellt wird, wenn die Transporteinrichtung abgeschaltet wird.

15. Verfahren nach Anspruch 14, **dadurch gekennzeichnet, dass** das Abstreifschild angehoben wird, wenn der gemessene Abstand (Δ) zwischen mindestens einem Referenzpunkt, der in Bezug zu der Unterkante (12A) des Abstreifschildes (12) steht, und dem abgefrästen Material (19) kleiner als ein erster vorgegebener unterer Grenzwert ist, und das Abstreifschild abgesenkt wird, wenn der Abstand (Δ) zwischen mindestens einem Referenzpunkt, der in Bezug zu der Unterkante (12A) des Abstreifschildes (12) steht, und dem abgefrästen Material (19) größer als ein zweiter vorgegebene oberer Grenzwert ist, wobei der obere Grenzwert gleich dem unteren Grenzwert ist oder der obere Grenzwert größer als der untere Grenzwert ist.

## Claims

1. Self-propelled construction machine, in particular road milling machine, which has a machine frame (1) and a milling drum housing (5) in which a milling drum (4) is arranged, a scraper device (11) with a scraper blade (12) being provided behind the milling drum in the direction of work which is height-adjustable using a drive unit (16) in relation to the milling drum,
**characterised in that**
the construction machine has a control and/or regulator unit (17) for the drive unit (16) for the adjustment of the height of the scraper blade (12) and a measurement device (20) to measure the distance (Δ) between at least one reference point, which relates to the lower edge (12A) of the scraper blade (12), and the milled material (19), the control and/or regulator unit (17) being designed in such a way that, as the material is milled off by the milling drum (4), the height of the scraper blade (12) is adjusted depending on the height of the milled material (19) remaining in the milled track.

2. Self-propelled construction machine according to claim 1, **characterised in that** the construction machine has a conveying device (8) to convey the milled material out of the milling drum housing (5) and an input unit (18) to enter a first or a second operating mode, the conveying device (8) being activated and the control and/or regulator device (17) being deactivated in the first operating mode such that the milled material is transported out of the milling drum housing while the scraper blade is shut so that the scraper blade can skim over the milled surface, and in the second operating mode the conveying device (8) being deactivated and the control and/or regulator device (17) being activated such that the milled material can remain in the milled track while the scraper blade is open.

3. Self-propelled construction machine according to either claim 1 or claim 2, **characterised in that** the control and/or regulator unit (17) controls the drive unit (16) in such a way that the measured distance (Δ) between at least one reference point, which relates to the lower edge (12A) of the scraper blade (12), and the milled material corresponds to a specified value or lies within a specified range.

4. Self-propelled construction machine according to any of claims 1 to 3, **characterised in that** the measurement device (20) for measuring the distance (Δ) between the lower edge (12A) of the scraper blade (12) and the milled material is designed such that the distance measurements are performed at a plurality of reference points, which are located between the left and right-hand edges of the scraper blade in the direction of work.

5. Self-propelled construction machine according to any of claims 1 to 4, **characterised in that** the control and/or regulator unit (17) is designed in such a way that the height of the scraper blade (12) depends on the mean value of the measured distances (Δ) between the respective reference points, which relate to the lower edge (12A) of the scraper blade (12), and the milled material.

6. Self-propelled construction machine according to any of claims 1 to 4, **characterised in that** the control and/or regulator unit (17) is designed in such a way that the height of the scraper blade (12) is adjusted depending on the smallest or greatest measured distance (Δ) between a reference point, which relates to the lower edge (12A) of the scraper blade (12), and the milled material.

7. Self-propelled construction machine according to any of claims 1 to 6, **characterised in that** the measurement device (20) for measuring the distance (Δ) between the milled material and the scraper blade is designed in such a way that at least one distance measurement is performed in a region in the centre between the left and right-hand edges of the scraper blade (12).

8. Self-propelled construction machine according to any of claims 1 to 7, **characterised in that** the measurement device (20) for measuring the distance (Δ) between the milled material and the scraper blade is designed in such a way that at least one distance measurement is performed at a specified distance (e) to the lefthand edge of the scraper blade (12) in the direction of work (10) and/or at least one distance measurement is performed at a specified distance (e) to the right-hand edge of the scraper blade (12) in the direction of work.

9. Self-propelled construction machine according to any of claims 1 to 8, **characterised in that** the control and/or regulator unit (17) controls the drive unit (16) in such a way that the scraper blade (12) is raised when the measured distance (Δ) between the at least one reference point, which relates to the lower edge (12A) of the scraper blade (12), and the milled material is smaller than a first specified lower limit value, and the scraper blade (12) is lowered when the distance between the scraper blade and the milled material is greater than a second specified upper limit value, the upper limit value being equal to the lower limit value or the upper limit value being greater than the lower limit value.

10. Self-propelled construction machine according to any of claims 1 to 9, **characterised in that** the measurement device (20) has at least one distance sensor (21, 22, 23), which is arranged on the rear side of the scraper blade (12) in the direction of work (10) above its lower edge (12A).

11. Self-propelled construction machine according to claim 10, **characterised in that** at least one distance sensor (21, 22, 23) is arranged movably between the left and right-hand edges of the scraper blade (12).

12. Self-propelled construction machine according to either claim 10 or claim 11, **characterised in that** the at least one distance sensor (21, 22, 23) is a contactless distance measurement sensor or a tactile distance measurement sensor.

13. Method for operating a self-propelled construction machine, in particular a road milling machine, which has a machine frame and a milling drum housing in which a milling drum is arranged, a scraper device with a scraper blade, which is height-adjustable in relation to the milling drum using a drive unit, being provided behind the milling drum in the direction of work, **characterised in that** the distance (Δ) between at least one reference point, which relates to the lower edge (12A) of the scraper blade (12), and the milled material (19) is measured and, as the material is milled off by the milling drum (4), the height of the scraper blade is adjusted depending on the height of the milled material remaining in the milled track.

14. Method according to claim 13, **characterised in that** the construction machine has a conveying device, which can be switched off, to convey the milled material out of the milling drum housing, the height of the scraper blade being adjusted depending on the height of the milled material remaining in the milled track when the conveying device is switched off.

15. Method according to claim 14, **characterised in that** the scraper blade is raised when the measured distance (Δ) between at least one reference point, which relates to the lower edge (12A) of the scraper blade (12), and the milled material (19) is smaller than a first specified lower limit value, and the scraper blade is lowered when the distance (Δ) between at least one reference point, which relates to the lower edge (12A) of the scraper blade (12), and the milled material (19) is greater than a second specified upper limit value, the upper limit value being equal to the lower limit value or the upper limit value being greater than the lower limit value.

## Revendications

1. Engin autopropulsé, en particulier fraiseuse de route qui présente un bâti de machine (1) et un boîtier de rouleau de fraisage (5), dans lequel un rouleau de fraisage (4) est agencé, un dispositif de raclage (11) avec une lame de raclage (12) étant prévu dans le sens de travail derrière le rouleau de fraisage, laquelle peut être réglée en hauteur avec une unité d'entraînement (16) par rapport au rouleau de fraisage,
**caractérisé en ce que**
l'engin présente une unité de commande et/ou de régulation (17) pour l'unité d'entraînement (16) pour le réglage en hauteur de la lame de raclage (12) et un dispositif de mesure (20) pour la mesure de la distance (Δ) entre au moins un point de référence qui se trouve en rapport avec l'arête inférieure (12A) de la lame de raclage (12) et le matériau fraisé (19), l'unité de commande et/ou de régulation (17) étant réalisée de telle manière que pendant le fraisage du matériau avec le rouleau de fraisage (4) la hauteur de la lame de raclage (12) soit réglée en fonction de la hauteur du matériau (19) fraisé restant dans la bande de fraisage.

2. Engin autopropulsé selon la revendication 1, **caractérisé en ce que** l'engin présente un dispositif de transport (8) pour le transport du matériau fraisé hors du boîtier de rouleau de fraisage (5) et une unité d'entrée (18) pour l'entrée d'un premier ou d'un second mode de fonctionnement, le dispositif de transport (8) étant activé et l'unité de commande et/ou de régulation (17) étant désactivée dans le premier mode de fonctionnement de sorte que le matériau fraisé puisse être transporté hors du boîtier de rouleau de fraisage en cas de lame de raclage fermée et la lame de raclage pouvant glisser sur la surface fraisée, et le dispositif de transport (8) étant désactivé et l'unité de commande et/ou de régulation (17) étant activée dans le second mode de fonctionnement de sorte que le matériau fraisé puisse rester dans la bande de fraisage en cas de lame de raclage ouverte.

3. Engin autopropulsé selon la revendication 1 ou 2, **caractérisé en ce que** l'unité de commande et/ou de régulation (17) commande l'unité d'entraînement (16) de telle manière que la distance mesurée (Δ) entre au moins un point de référence qui se trouve en rapport avec l'arête inférieure (12A) de la lame de raclage (12) et le matériau fraisé corresponde à une valeur prescrite ou se trouve dans une plage de valeur prescrite.

4. Engin autopropulsé selon l'une quelconque des revendications 1 à 3, **caractérisé en ce que** le dispositif de mesure (20) est réalisé pour la mesure de la distance (Δ) entre l'arête inférieure (12A) de la lame de raclage (12) et le matériau fraisé de telle manière que des mesures de distance soient entreprises sur plusieurs points de référence qui se trouvent entre l'arête droite et gauche dans le sens de travail de la lame de raclage.

5. Engin autopropulsé selon l'une quelconque des revendications 1 à 4, **caractérisé en ce que** l'unité de commande et de régulation (17) est réalisée de telle manière que la hauteur de la lame de raclage (12) soit réglée en fonction de la valeur médiane des distances mesurées (Δ) entre les points de référence respectifs qui se trouvent en rapport avec l'arête inférieure (12A) de la lame de raclage (12) et le matériau fraisé.

6. Engin autopropulsé selon l'une quelconque des revendications 1 à 4, **caractérisé en ce que** l'unité de commande et de régulation (17) est réalisée de telle manière que la hauteur de la lame de raclage (12) soit réglée en fonction de la plus petite ou plus grande distance mesurée (Δ) entre un point de référence qui se trouve en rapport avec l'arête inférieure (12A) de la lame de raclage (12) et le matériau fraisé.

7. Engin autopropulsé selon l'une quelconque des revendications 1 à 6, **caractérisé en ce que** le dispositif de mesure (20) est réalisé pour la mesure de la distance (Δ) entre le matériau fraisé et la lame de raclage de telle manière qu'au moins une mesure de distance soit entreprise dans une zone centrale entre l'arête gauche et droite de la lame de raclage (12).

8. Engin autopropulsé selon l'une quelconque des revendications 1 à 7, **caractérisé en ce que** le dispositif de mesure (20) est réalisé pour la mesure de la distance (Δ) entre le matériau fraisé et la lame de raclage de telle manière qu'au moins une mesure de distance soit entreprise dans une distance prescrite (e) par rapport à l'arête gauche dans le sens de travail (10) de la lame de raclage (12) et/ou au moins une mesure de distance dans une distance prescrite (e) par rapport à l'arête droite dans le sens de travail de la lame de raclage (12).

9. Engin autopropulsé selon l'une quelconque des revendications 1 à 8, **caractérisé en ce que** l'unité de commande et/ou de régulation (17) commande l'unité d'entraînement (16) de telle manière que la lame de raclage (12) soit relevée lorsque la distance mesurée (Δ) entre l'au moins un point de référence qui se trouve en rapport avec l'arête inférieure (12A) de la lame de raclage (12) et le matériau fraisé est inférieure à une première valeur limite inférieure prescrite et la lame de raclage (12) est abaissée lorsque la distance entre la lame de raclage et le matériau fraisé est supérieure à une seconde valeur limite supérieure prescrite, la valeur limite supérieure étant identique à la valeur limite inférieure ou la valeur limite supérieure étant supérieure à la valeur limite inférieure.

10. Engin autopropulsé selon l'une quelconque des revendications 1 à 9, **caractérisé en ce que** le dispositif de mesure (20) présente au moins un capteur de distance (21, 22, 23) qui sont agencés sur le côté arrière dans le sens de travail (10) de la lame de raclage (12) au-dessus de son arête inférieure (12A).

11. Engin autopropulsé selon la revendication 10, **caractérisé en ce que** l'au moins un capteur de distance (21, 22, 23) est agencé de manière mobile entre l'arête gauche et droite de la lame de raclage (12).

12. Engin autopropulsé selon la revendication 10 ou 11, **caractérisé en ce que** l'au moins un capteur de distance (21, 22, 23) est un capteur de mesure de distance sans contact ou un capteur de mesure de distance tactile.

13. Procédé de fonctionnement d'un engin autopropulsé, en particulier d'une fraiseuse de route qui présente un bâti de machine et un boîtier de rouleau de fraisage, dans lequel un rouleau de fraisage est agencé, un dispositif de raclage avec une lame de raclage étant prévu dans le sens de travail derrière le rouleau de fraisage, laquelle peut être réglée en hauteur avec une unité d'entraînement par rapport au rouleau de fraisage, **caractérisé en ce que** la distance (Δ) entre au moins un point de référence qui se trouve en rapport avec l'arête inférieure (12A) de la lame de raclage (12) et le matériau fraisé (19) est mesurée et pendant le fraisage du matériau avec le rouleau de fraisage (4) la hauteur de la lame de raclage est réglée en fonction de la hauteur du matériau fraisé restant dans la bande de fraisage.

14. Procédé selon la revendication 13, **caractérisé en ce que** l'engin présente un dispositif de transport pouvant être désactivé pour le transport du matériau fraisé hors du boîtier de rouleau de fraisage, la hauteur de la lame de raclage étant réglée en fonction de la hauteur du matériau fraisé restant dans la bande de fraisage lorsque le dispositif de transport est désactivé.

15. Procédé selon la revendication 14, **caractérisé en ce que** la lame de raclage est relevée lorsque la distance mesurée (Δ) entre au moins un point de référence qui se trouve en rapport avec l'arête inférieure (12A) de la lame de raclage (12) et le matériau fraisé (19) est inférieure à une première valeur limite inférieure prescrite, et la lame de raclage est abaissée lorsque la distance (Δ) entre au moins un point de référence qui se trouve en rapport avec l'arête inférieure (12A) de la lame de raclage (12) et le matériau fraisé (19) est supérieure à une seconde valeur limite supérieure prescrite, la valeur limite supérieure étant identique à la valeur limite inférieure ou la valeur limite supérieure étant supérieure à la valeur limite inférieure.
